# EUROPÄISCHE PATENTSCHRIFT

(11) **EP 1 033 389 B1**
(45) Veröffentlichungstag und Bekanntmachung des Hinweises auf die Patenterteilung: **28.07.2004**
(21) Anmeldenummer: 00102290.4
(22) Anmeldetag: 17.02.2000
(51) Int. Cl.: C08L 83/04, C08J 3/20, C08J 3/21, C08K 3/00

(54) **Verfahren zur kontinuierlichen Herstellung hochviskoser füllstoffhaltiger Siliconmassen**
Process for the continuous production of high viscosity filled silicone compounds
Procédé de préparation de compositions à haute viscosite de silicone chargées

(30) Priorität: 03.03.1999 DE 19909338
(43) Veröffentlichungstag der Anmeldung: 06.09.2000
(73) Patentinhaber: Wacker-Chemie GmbH, 81737 München (DE)
(72) Erfinder: Achenbach, Frank, Dr., 84359 Simbach (DE); Heisler, Manfred, Dr., 84547 Emmerting (DE); Fehn, Armin, Dr., 84547 Emmerting (DE); Wörner, Christof, Dr., 84489 Burghausen (DE)
(74) Vertreter: Fritz, Helmut, Dr.

(56) Entgegenhaltungen:
- EP-A- 0 258 159
- EP-A- 0 909 777
- WO-A-92/13694

## Beschreibung

Die Erfindung betrifft ein kontinuierliches Verfahren zur Herstellung hochviskoser füllstoffhaltiger Siliconmassen.

Die Herstellung füllstoffhaltiger Siliconmassen, d.h. die Herstellung flüssig-phasiger homogener Massen, welche sich im wesentlichen aus feinteiligen Feststoffen und Polyorganosiloxanen zusammensetzen, ist ein bedeutendes, in großem Umfang betriebenes Verfahren, um beispielsweise zu vernetzbaren Siliconelastomermassen, wie die dem Fachmann unter den Bezeichnungen HTV, LSR, RTV-2 und RTV-1 bekannten Massen, Siliconmasterbatchen, Siliconpasten etc. zu gelangen.

Grundsätzlich lassen sich kontinuierliche und diskontinuierliche (batchweise arbeitende) Verfahren zur Herstellung füllstoffhaltiger Siliconmassen unterscheiden.

Diskontinuierlich arbeitende Verfahren sind dadurch charakterisiert, daß in einem ersten Schritt sämtliche Bestandteile der füllstoffhaltigen Siliconmasse einem Mischaggregat, z.B. Innenmischer, ggf. portionsweise zugeführt und miteinander vermischt werden. Die fertige Siliconmasse wird anschließend in einem zweiten Schritt dem Mischaggregat entnommen, bevor das Mischaggregat gegebenenfalls erneut mit den Einsatzstoffen beschickt wird.

Kontinuierliche Verfahren zeichnen sich dadurch aus, daß einem Mischaggregat, z.B. einem Pilgerschrittkneter, die Einsatzstoffe kontinuierlich im rezepturgemäßen Verhältnis zugeführt, vermischt und gegebenenfalls entgast werden und simultan eine kontinuierliche Entnahme der fertigen Siliconmasse aus dem Mischaggregat erfolgt, wodurch sich ein dynamisches Gleichgewicht zwischen eingetragenen Einsatzstoffen und ausgetragener Siliconmasse einstellt. Ein solches Verfahren zur kontinuierlichen Herstellung von HTV-Siliconmassen ist beispielsweise in EP-A-570387 beschrieben.

Kontinuierliche Verfahren zur Herstellung füllstoffhaltiger Siliconmassen stellen gegenüber den diskontinuierlichen Verfahren im Hinblick auf Wirtschaftlichkeit (wesentlich höhere Raum-Zeit-Ausbeuten) und Produktqualität (geringere Schwankungen) einen enormen Fortschritt dar.

Bei der Herstellung von mit aktiv verstärkenden Füllstoffen hochgefüllten Siliconmassen besteht grundsätzlich die Schwierigkeit, relativ hohe Anteile eines feinteiligen Feststoffes in flüssig-phasiges Polyorganosiloxan zu dispergieren. Bedingt durch die hohe spezifische Oberfläche aktiv verstärkender Füllstoffe sowie die damit verbundene intensive Wechselwirkung zwischen Füllstoff und Polyorganosiloxan, kommt es leicht zur Phaseninversion (crumbling), worunter ein Zerfall der zuvor kompakten, flüssigen Polyorganosiloxanphase in eine fest-phasige, pulverige Masse zu verstehen ist. Die Weiterverarbeitung der pulverigen Masse zu einer kompakten, homogenen, flüssig-phasigen Siliconmasse erfordert eine erneute Phasenumkehr (Kompaktierung), die schwierig zu bewerkstelligen ist und zahlreiche Nachteile zur Folge hat.

Um eine Kompaktierung der pulverförmigen Masse zu erzielen, muß das Mischaggregat so aufgebaut sein, daß die pulverförmige Masse aufgestaut und extrem verdichtet wird, um genügend Scherenergie einbringen zu können, um eine Kompaktierung zu erreichen. Apparativ kann dies durch den Einbau sogenannter Stauringe, welche den Querschnitt des (rohrförmigen) Mischaggregates vermindern, erfolgen. Der hohe erforderliche Preßdruck, welchem die pulverförmige Masse ausgesetzt werden muß, sowie die gleichzeitige Scherung sind mit einer sehr hohen trockenen Reibung zwischen den Teilchen der pulverigen Masse verbunden. Hierbei kommt es zur Mechanodestruktion der hochmolekularen Polyorganosiloxane, wodurch die Endeigenschaften der aus diesen Siliconmassen hergestellten Fertigprodukte nachteilig verändert werden. Insbesondere zeigt sich, daß vor allem hochgefüllte HTV-Siliconmassen, deren kontinuierliche Herstellung eine Phaseninversion beinhaltete, die Tendenz zur Verstrammung (crepe hardening) und zur Brüchigkeit bei der Lagerung weit stärker zeigen, als HTV-Siliconmassen gleicher Zusammensetzung, deren Herstellung diskontinuierlich und phaseninversionsfrei, z.B. in einem Kneter, erfolgte.

Die intensive Scherung unter hohem Preßdruck führt auch zu erhöhtem Geräteverschleiß, wobei Metallabrieb die Siliconmassen verunreinigt.

Die Schwierigkeit einer Kompaktierung pulverförmiger Siliconmassen in kontinuierlich arbeitenden Mischaggregaten zeigt sich des weiteren in der Tatsache, daß selbst durch Zusammenpressen der Masse unter hohem Druck sowie gleichzeitiger Scherung die Masse u.U. nur unvollständig kompaktiert wird, so daß nach Wegfall des Preßdruckes bei weiterer Scherung wieder zusammenhangslose Siliconmasseteilchen gebildet werden. Häufig erfolgt die Bildung einer stabilkompakten, flüssig-phasigen Siliconmasse daher erst nach mehrerer Kompaktierungsschritten. Dies bedeutet auch, daß ein wirkliches Kneten im Sinne eines laminaren und dispersiven Mischvorganges erst im hinteren Teil des Mischaggregates, kurz vor dem Austrag der Masse, erfolgt; das Arbeitsfenster des Verfahrens wird damit erheblich eingeengt, d.h., geringfügige Änderungen in den apparativen Gegebenheiten, Rohstoffen, Prozeßparametern (Durchsatz, Temperatur, Vakuum etc.) können gravierende Veränderungen in der Produktqualität zur Folge haben.

Diese Nachteile haften auch allen bekannten kontinuierlichen Verfahren zur Herstellung hochgefüllter, hochviskoser Siliconmassen wie HTV-Siliconmassen an.

Generell sind die mit der Phaseninversion verbundenen Probleme um so gravierender, je höher der zu erzielende Füllstoffgehalt der Siliconmasse, je höher die spezifische Oberfläche des Füllstoffes und je stärker die Füllstoff-Polyorganosiloxan-Wechselwirkung ist.

EP-A-849.331 beschreibt ein Verfahren zur Herstellung hochgefüllter Siliconpolymer-Feststoff-Vormischungen, welches den Zerfall der Siliconmasse bei der Vermischung durch Zusatz von leichtflüchtigen, keine hydrolysierbaren Gruppen aufweisenden, niedermolekularen siliciumorganischen Verbindungen vermeidet, wobei nach der Einarbeitung des Feststoffes die niedermolekularen siliciumorganischen Verbindungen wieder entfernt werden. Für die kontinuierliche Herstellung hochgefüllter Siliconmassen ist dieses Verfahren wenig geeignet, da die niedermolekularen siliciumorganischen Verbindungen in sehr großer Menge dem Polyorganosiloxan beigemischt werden müssen, um Phaseninversion zu verhindern; zudem ist das nachträgliche Entfernen großer Mengen niedermolekularer siliciumorganischer Verbindungen aufwendig und sicherheitstechnisch kritisch.

Es bestand die Aufgabe, ein einfach durchführbares kontinuierliches Verfahren zur Herstellung lagerstabiler füllstoffhaltiger Siliconmassen bereitzustellen.

Gegenstand der Erfindung ist ein kontinuierliches Verfahren zur Herstellung füllstoffhaltiger Siliconmassen (P), bei dem eine Füllstoff (F1) enthaltende Siliconmasse (E) mit Füllstoff (F2) vermischt wird, wobei eine Teilmenge der Siliconmasse (P) als Siliconmasse (E) zurückgeführt wird.

Das erfindungsgemäße Verfahren zeichnet sich dadurch aus, daß es die phaseninversionsfreie kontinuierliche Herstellung hochgefüllter Siliconmassen (P), wie hitzehärtbarer HTV-Siliconkautschukmassen, ermöglicht, indem im Unterschied zu den herkömmlichen Verfahren der Füllstoff nicht in das (füllstofffreie) Polyorganosiloxan zudosiert und eingemischt wird, sondern der Füllstoff zu einer bereits füllstoffhaltigen Siliconmasse (E) kontinuierlich zudosiert und in diese eingemischt wird.

Insbesondere weist das erfindungsgemäße Verfahren nachstehende Vorteile auf:
- Das Kompaktieren nach herkömmlichen Verfahren ist entweder zeitintensiv oder macht eine spezielle apparative Gestaltung des Mischaggregates erforderlich, z.B. um die Masse unter hohem Preßdruck wiederholt anstauen zu können. Das erfindungsgemäße Verfahren ermöglicht ein schnelleres Kompaktieren und stellt geringere Anforderungen an die apparative Gestaltung des Mischaggregates.
- Während des Mischens tritt keine trockene Reibung auf, wodurch der Materialverschleiß am Mischaggregat vermindert wird.
- Das Einziehen und Einmischen des Füllstoffs (F2) erfolgt verglichen mit einer herkömmlichen Polyorganosiloxan-Vorlage wesentlich schneller.
- Die mit der trockenen Reibung herkömmlicher Verfahren verknüpfte Mechanodestruktion des Polyorganosiloxanes wird vermieden.
- Die nach dem erfindungsgemäßen Verfahren hergestellten Siliconmassen (P) zeichen sich durch bessere Lagerstabilität aus, insbesondere werden Verstrammung und Brüchigkeit vermieden.
- Das erfindungsgemäße Verfahren ermöglicht eine höhere Dispergiergüte des feinteiligen Füllstoffes (F2), da im Mischaggregat keine trockene Reibung, sondern die mit einem Knetvorgang verbundenen hohen Scherspannungen ein intensives laminares und dispersives Mischen bewirken.
- Die Länge rohrförmiger kontinuierlich arbeitender Mischaggregate kann wesentlich reduziert werden, da die jederzeit kompakte Siliconmasse über die gesamte Länge des Mischaggregates einem intensiven Knetprozeß unterworfen wird.
- Das erfindungsgemäße Verfahren ermöglicht die Herstellung solcher Siliconmassen (P), die sich bisher nur diskontinuierlich im Kneter herstellen ließen und einer kontinuierlichen Herstellbarkeit entzogen, da mit dem erfindungsgemäßen Verfahren die im Kneter herrschenden Scherverhältnisse wesentlich besser nachgestellt werden können.
- Da bei dem erfindungsgemäßen Verfahren stets eine kompakte Phase vorhanden ist, deren Oberfläche infolge des Knetens ständig erneuert wird, sind wesentlich günstigere Voraussetzungen für das sorfältige Entfernen flüchtiger Bestandteile, insbesondere dem Entgasen unter Vakuum, gegeben.
- Aufgrund der besseren Vermischbarkeit des Polyorganosiloxanes bzw. des Füllstoffes (F2) mit der Siliconmasse (E) kann der Zusatz von Dispergierhilfsmitteln etc. auf ein Minumum reduziert werden

Weicht die Zusammensetzung der als Einsatzstoff fungierenden Siliconmasse (E) von jener der gewünschten Siliconmasse (P) ab, kann dies durch eine entsprechende Zudosierung von Polyorganosiloxan und/oder Füllstoff (F2) berücksichtigt werden, so daß in diesem Fall eine Siliconmasse (P) vorgegebener Zusammensetzung herstellbar ist.

Beispielsweise kann das erfindungsgemäße Verfahren dazu dienen, lediglich den Füllstoffgehalt einer bereits füllstoffhaltigen Siliconmasse (E), die gegebenenfalls in einem anderen Mischaggregat hergestellt wurde, in einem kontinuierlich arbeitenden Mischaggregat zu erhöhen; in diesem Fall würde die Notwendigkeit des Einmischens von Polyorganosiloxan selbstverständlich entfallen.

Das erfindungsgemäße Verfahren wird dadurch realisiert, indem eine Teilmenge der ausgetragenen Siliconmasse (P) als Siliconmasse (E) in den vorderen Teil des Mischaggregates zurückgeführt wird, so daß die übrigen Einsatzstoffe, die Polyorganosiloxan und Füllstoff (F2) umfassen, im rezepturgemäßen Verhältnis zudosiert und in diesen zurückgeführten Mengenstrom eingemischt werden können. Im Grunde stellt das Verfahren einen Kreisprozeß dar, wobei der vorzugsweise größere Teil der fertigen Siliconmasse (P) ausgetragen wird und der übrige, vorzugsweise kleinere Teil der fertigen Siliconmasse (P) dem kontinuierlichen Mischaggregat wieder als Siliconmasse (E) zugeführt wird, um die Phaseninversion zu unterbinden. Die Rückführung von Siliconmasse (P) kann beispielsweise in Form einer Flüssigkeit, als Endlosstrang, Riegel oder Granulat erfolgen.

Es ergeben sich durch die Rückführung insbesondere die Vorteile:
- Die Qualität der Siliconmasse (P) ist geringeren Schwankungen unterworfen, weil Fluktuationen, z.B. in der Füllstoffdosierung, ausgeglichen werden.
- Das erfindungsgemäße Verfahren bietet die Möglichkeit, durch Erhöhung des Verhältnisses von rückgeführter zu ausgetragener Siliconmasse (P) die effektive Verweilzeit beliebig zu verändern, insbesondere zu erhöhen, so daß auch Siliconmassen (P) hergestellt werden können, an die äußerst hohe Anforderungen hinsichtlich der Dispergiergüte des Füllstoffes gestellt werden.
- Das erfindungsgemäße Verfahren garantiert die Herstellbarkeit ultimativ hochgefüllter Siliconmassen (P): Zum einen kann bei vollständiger Rückführung eine quasi stufenlose Erhöhung des Füllstoffgehaltes der Siliconmasse (P) vorgenommen werden. Zum anderen kann das Verhältnis von rückgeführter zu ausgetragener Siliconmasse (P) beliebig eingestellt werden, so bei vollständiger Rückführung der ausgetragenen Siliconmasse (P) eine batchartige Fahrweise möglich wird.

Die Reihenfolge der Zudosierung des Polyorganosiloxanes und Füllstoffes (F2) in die Siliconmasse (E) ist nicht festgelegt. In einer bevorzugten Ausführungsform wird zunächst das Polyorganosiloxan in die Siliconmasse (E) eingemischt und anschließend der Füllstoff (F2), da hierdurch der Gefahr des Zerfalls der kompakten Siliconmasse zu einem pulverförmigen Material besonders gut entgegengewirkt wird. Es kann auch vorteilhafter sein, zunächst den Füllstoff (F2) einzumischen, um eine besonders hochviskose Masse zu erhalten, was hinsichtlich der Dispergiergüte der Füllstoffteilchen aufgrund der hohen auftretenden Scherspannungen vorteilhaft sein kann, und erst im Anschluß daran eine Rückverdünnung durch Zudosierung des Polyorganosiloxanes vorzunehmen. Polyorganosiloxan und Füllstoff (F2) sowie gegebenenfalls weitere Zusätze können auch quasi gleichzeitig zudosiert und eingemischt werden.

Bevorzugt ist es, nur soviel Siliconmasse (P) zurückzuführen, daß eine Phaseninversion zuverlässig vermieden wird und die Raum-Zeit-Ausbeute des kontinuierlich arbeitenden Mischaggregates nicht unnötig vermindert wird. Vorzugsweise werden von 100 Gew.-Teilen ausgetragener Siliconmasse (P) bei stationärem Betrieb 1 bis 99 Gew.-Teile als Siliconmasse (E) zurückgeführt, vorzugsweise 5 bis 50 Gew.-Teile, besonders bevorzugt 10 bis 30 Gew.-Teile.

Da sich der Mischvorgang je nach chemischer Zusammensetzung und insbesondere Viskosität des Polyorganosiloxans sowie der Art und Einsatzmenge des Füllstoffs sehr unterschiedlich gestaltet, wurden zahlreiche Verfahren und Mischwerkzeuge entwickelt, um ein optimales Vermischen zu gewährleisten.

Mischwerkzeuge, die zur Herstellung Füllstoff (F1) enthaltender Siliconmassen (E) eingesetzt werden können, sind beispielsweise Rührwerke, Sigmakneter, Stempelkneter, Innenmischer, Einschneckenextruder, Doppelschneckenextruder, oszillierende Pilgerschrittkneter, Dissolver, Mischturbinen, Preßmischer und Mischwalzwerke in vielfältigsten Ausführungen.

Bevorzugt wird das erfindungsgemäße Verfahren in einem kontinuierlich arbeitenden Mischaggregat, wie Pilgerschrittkneter, Ein- oder Doppelschneckenextruder, realisiert. Dort wird während des Mischvorganges die Gesamtmasse von der Dosiereinheit zunehmend entfernt.

Das Vermischen des Füllstoffs (F2) sowie gegebenenfalls weiterer Einsatzstoffe mit der Siliconmasse (E) erfolgt vorzugsweise bei einer Temperatur von -40°C bis +300°C. Sofern keine thermolabilen Einsatzstoffe eingemischt werden sollen, ist es bevorzugt, den Mischvorgang bei erhöhter Temperatur bei 50°C bis 250°C, insbesondere bei 150°C bis 230°C durchzuführen. Aufgrund der Friktionswärme, der Zudosierung der Einsatzstoffe sowie der apparativ bedingten Grenzen in der Temperierung des kontinuierlichen Mischaggregates bildet sich im allgemeinen ein Temperaturprofil entlang der Mischstrecke aus, welches durchaus auch höhere Temperaturunterschiede aufweisen kann.

Das Vermischen der Einsatzstoffe mit der Siliconmasse (E) kann bei Normaldruck, erhöhtem oder vermindertem Druck erfolgen. Bevorzugt ist das Anlegen eines Vakuums an das Mischaggregat, um flüchtige Bestandteile aus der Masse zu entfernen (Entgasen) und/oder die Zudosierung von Bestandteilen der Masse zu erleichtern. Bevorzugt sind Drücke von höchstens 950 mbar, besonders bevorzugt von 900 bis 1 mbar. Auch hinsichtlich des Druckes bildet sich innerhalb des Mischaggregates im allgemeinen ein Profil aus. Gegebenenfalls kann ein Inertgas (Stickstoff, Argon) eingesetzt werden, um z.B. sicherheitstechnische Auflagen zu erfüllen. Des weiteren kann ein Gasstrom (Luft, Stickstoff, Argon etc.) gezielt zugeführt werden, um flüchtige Bestandteile besser entfernen zu können (Schleppgas).

Der Füllstoffgehalt der Siliconmasse (E) liegt bei 5 bis 90 Gew.-%, vorzugsweise bei 10 bis 50 Gew.-%. Besonders bevorzugt werden Siliconmassen (E) mit einem Füllstoffgehalt von 20 bis 40 Gew.-% eingesetzt.

Als Füllstoffe (F1, F2), kommen sämtliche üblicherweise in Siliconmassen eingesetzte Füllstoffe in Frage, wobei auch Mischungen von verschiedenen Füllstoffen eingesetzt werden können und Füllstoffe (F1) und (F2) unterschiedlich sein können. Geeignete Füllstoffe (F1, F2) sind beispielsweise Kieselsäuren, Ruße, Metalloxide, -carbonate, -sulfate,--nitride, Diatomeenerde, Tone, Kreiden, Glimmer, Metallpulver, Aktivkohle, Pulver organischer Kunststoffe etc. Wichtig ist, daß die Viskosität der füllstoffhaltigen Siliconmasse aufgrund des Füllstoffgehaltes deutlich höher ist als die Viskosität des Polyorganosiloxanes, welches auf kontinuierliche Weise in diese füllstoffhaltige Siliconmasse eingemischt werden soll. Bevorzugt sind verstärkende Füllstoffe, also Füllstoffe mit einer spezifischen Oberfläche nach BET von mindestens 50 m²/g, vorzugsweise 50-500 m²/g, wie pyrogen erzeugte Kieselsäure, unter Erhalt der Struktur entwässerte Kieselsäurehydrogele, also sog. Aerogele, andere Arten von gefälltem Siliciumdioxid sowie Ruße. Die besonders bevorzugten pyrogen erzeugten Kieselsäuren, gefällten Kieselsäuren und Ruße können gegebenenfalls einer Oberflächenbehandlung unterworfen worden sein, um z.B. deren Dispergierbarkeit zu verbessern.

Enthalten sein können insbesondere auch die in reiner Form bei Raumtemperatur festen Siliconharze vom Typ der M_{w}DₓT_{y}Q_{z}-Siliconharze.

Bei den der Siliconmasse (E) zugrunde liegenden und im erfindungsgemäßen Verfahren eingemischten Polyorganosiloxanen kann es sich um eines oder um eine Mischung unterschiedlicher Polyorganosiloxane handeln. Im Grunde können sämtliche, dem Fachmann bei der Herstellung von HTV-, LSR-, RTV-1 und RTV-2-Massen wohl bekannten, hinlänglich beschriebenen Polyorganosiloxane eingesetzt werden. Hierzu zählen lineare, verzweigte, cyclische oder harzartige Polyorganosiloxane, die gegebnenfalls, meist zum Zwecke der Vernetzbarkeit funktionelle Gruppen enthalten können. Vorzugsweise werden lineare Polyorganosiloxane eingesetzt, wie Polydimethylsiloxane mit einem Polymerisationsgrad von 50 bis 9.000. Bevorzugte Organoreste der Polyorganosiloxane sind Methyl, Phenyl und Trifluorpropyl, besonders bevorzugt ist der Methyl-Rest. Die in den Polyorganosiloxanen bevorzugt befindlichen funktionellen Gruppen sind -SiOH, -SiOR, Si-Vinyl und -SiH, besonders bevorzugt ist die Vinyl-Gruppe. Besonders bevorzugte Polyorganosiloxane sind die üblicherweise zur Herstellung von hitzehärtenden HTV-Siliconmassen eingesetzten Polyorganosiloxane mit einem Brabenderwert zwischen 200 und 900 daNm bei 25°C gemessen, insbesondere zwischen 400 und 700 daNm Die Zusammensetzung der Polyorganosiloxane entspricht vorzugsweise der durchschnittlichen allgemeinen Formel (1)

R¹ₐR²_{b}SiO _{(4-a-b)/2} (1),

in der die Reste
- **R**^{**1**}: gleiche oder verschiedene einwertige Si-gebundene Reste darstellen, ausgewählt aus -H -OH, -OR, wobei R einen C₁-C₁₀-Kohlenwasserstoffrest bezeichnet, sowie gegebenenfalls halogen- oder cyanosubstituierte, gegebenenfalls über eine zweiwertige organische Gruppe an Silicium gebundene C₁-C₁₀-Kohlenwasserstoffreste, die mindestens eine aliphatische Kohlenstoff-Kohlenstoff Mehrfachbindung enthalten,
- **R**^{**2**}: gleiche oder verschiedene einwertige Si-gebundene, gegebenenfalls halogen- oder cyanosubstituierte C₁-C₁₀-Kohlenwasserstoffreste sind, die keine aliphatischen Kohlenstoff-Kohlenstoff Mehrfachbindungen enthalten.
- **a**: eine nicht negative Zahl von 0 bis 1 ist, und
- **b**: eine nicht negative Zahl von 1 bis 2.1 ist.

R¹ ist vorzugsweise eine Alkenylgruppe, die einer Reaktion mit einem SiH-funktionellen Vernetzungsmittel oder mit einem Peroxid zugänglich ist. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Organische zweiwertige Gruppen, über die die Alkenylgruppen an Silicium der Polymerkette gebunden sein können, bestehen beispielsweise aus Oxyalkyleneinheiten, wie solche der allgemeinen Formel (2)

-(O)ₚ[(CH₂)_{q}O]ᵣ- (2),

in der
- **p**: die Werte 0 oder 1, insbesondere 0,
- **q**: Werte von 1 bis 4, insbesondere 1 oder 2 und
- **r**: Werte von 1 bis 20, insbesondere von 1 bis 5 bedeuten.
Die Oxyalkyleneinheiten der allgemeinen Formel (2) sind links an ein Siliciumatom gebunden.

Die Reste **R**^{**1**} können in jeder Position der Polymerkette, insbesondere an den endständigen Siliciumatomen, gebunden sein.

**R**^{**2**} weist vorzugsweise 1 bis 6 Kohlenstoffatome auf. Insbesondere bevorzugt sind Methyl und Phenyl.

Die Struktur der Polyorganosiloxane der allgemeinen Formel (1) kann linear, cyclisch oder auch verzweigt sein. Der Gehalt an zu verzweigten Polyorganosiloxanen führenden tri- und/oder tetrafunktionellen Einheiten, ist typischerweise sehr gering, nämlich vorzugsweise höchstens 20 Mol-%, insbesondere höchstens 0,1 Mol-%.

Besonders bevorzugt ist die Verwendung Vinylgruppen enthaltender Polydimethylsiloxane, deren Moleküle der allgemeinen Formel (3)

(ViMe₂SiO_{1/2})_{c}(ViMeSiO)_{d}(Me₂SiO)ₑ(Me₃SiO_{1/2})_{f} (3),

entsprechen, wobei die nichtnegativen ganzen Zahlen **c, d, e** und **f** folgende Relationen erfüllen: **c+d** ≥ 1, **c+f** = 2, 1000<(**d+e**)<9000, vorzugsweise 3000<(**d+e**)<7000, und 0<(**d+1**)/(**d+e**)<1 , vorzugsweise 0<(**d+1**)/(**d+e**)<0.1.

Die Siliconmassen (E) und (P) können weitere Zusätze enthalten, die der Einstellung spezieller Eigenschaften dienen, insbesondere Verarbeitungshilfsmittel, wie Weichmacher, beispielsweise silanolhaltige Oligosiloxane, trimethylsilylendblockierte Dimethyl(oligo- oder poly)siloxane; Tenside; Dispergierhilfsmittel; Hydrophobiermittel, beispielsweise Silazane, silanolhaltige Oligosiloxane; Destrukturierungsagenzien, Weichwalzmittel sowie Farb- und Pigmentzusätze, Inhibitoren, Beschleuniger, Katalysatoren, beispielsweise Pt-haltige Hydrosilylierungskatalysatoren; Vernetzer, beispielsweise SiH-haltige Siloxane, Peroxide; Haftvermittler, Hitzestabilisatoren, Antioxidantien etc. Besonders bevorzugte Zusätze sind die der Einarbeitung hydrophiler Füllstoffe (F2), wie hydrophiler pyrogener oder gefällter Kieselsäure, dienenden Hydrophobiermittel, wie silanolhaltige Oligosiloxane und Organodisilazane, sowie trimethylsilyl-endständige Oligodimethylsiloxane.

Die Zudosierung und Einmischung der Einsatzstoffe, nämlich der Füllstoffe (F2), Polyorganosiloxane und Zusätze in die Siliconmasse (E) kann in beliebiger Reihenfolge der Einsatzstoffe geschehen; auch kann die Zudosierung z.B. des/der Füllstoffe(s) an einer oder meheren Stelle(n) des Mischaggregates erfolgen. Vorzugsweise erfolgt die Zudosierung der Polyorganosiloxane an einer Stelle.

Bei den nach dem erfindungsgemäßen Verfahren hergestellten Siliconmassen (P) handelt es sich bevorzugt um höherviskose Siliconmassen mit einer bei 25°C gemessenen Viskosität von mindestens 500 Pa.s. Das erfindungsgemäße Verfahren eignet sich besonders zur Herstellung höherviskoser Siliconmassen (P) mit einer bei 25°C gemessenen Brabenderplastizität von 100 bis 1.000 daN.m, sowie höchstviskose Massen mit einer nach Mooney bestimmten Viskosität von 10 bis 200 Mooney-Einheiten (Mooney-Endwert, ML(1+4), 23°C, DIN 53523).

Das erfindungsgemäße Verfahren eignet sich besonders zur Herstellung hochgefüllter, hochviskoser Siliconmassen, wie der hitzehärtbaren HTV-Massen, hochviskosen Siliconpasten und hochgefüllten Siliconmasterbatchen. Bei den hitzehärtbaren HTV-Massen kann es sich auch um Basismischungen handeln, die der Herstellung von vernetzungsfähigen HTV-Fertigmassen dienen. Die hergestellten HTV-Massen können z.B. von der Art der peroxidisch-vernetzenden, durch Pt-katalysierte Additionsreaktion vernetzenden oder durch Kondensationsreaktion oder energiereiche Strahlung vernetzenden HTV-Massen sein.

In den nachfolgenden Beispielen sind, falls jeweils nicht anders angegeben,
a) alle Drücke 0,10 MPa (abs.);
b) alle Temperaturen 20° C .

### Beispiele:

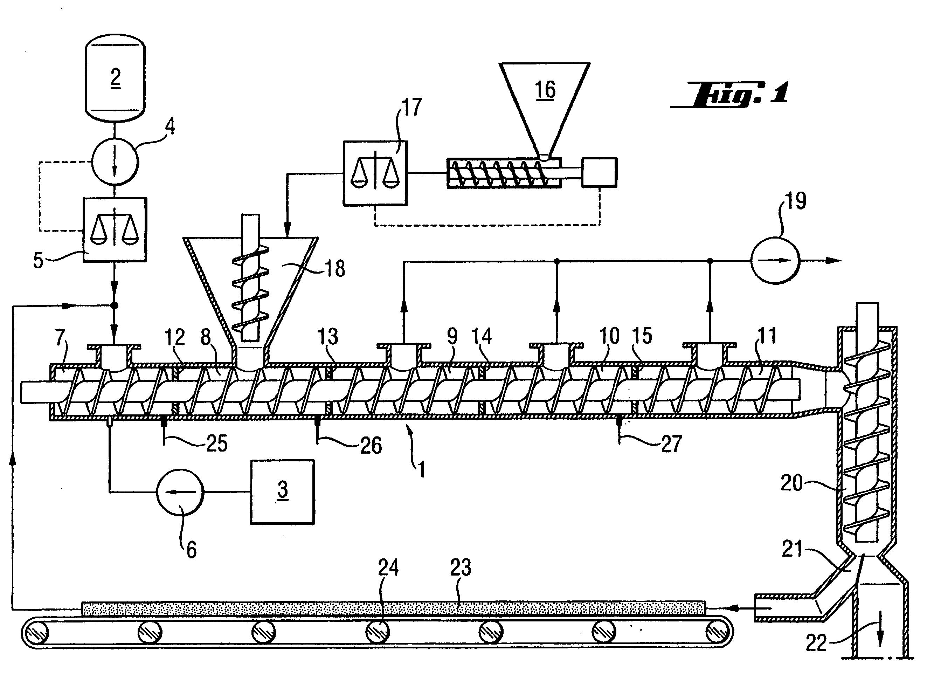

### Beschreibung der Versuchsanlage anhand Fig. 1

Für die Versuche wurde ein Kneter der Firma 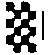 Buss Compounding Systems AG 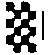 vom Typ LR 100/19D eingesetzt.

In den ersten 3D des Kneters (1) wird Polymer (2) und Weichmacher (3) dosiert. Geeignet zur Polymerdosierung sind Zahnradpumpen oder Dosierschnecken, allgemein Förderorgane, die saugseitig das schwer fließfähige Polymer gut aufzunehmen vermögen und zudem in der Lage sind, die zur Produktförderung erforderlichen höheren Drücke aufzubauen. Im konkreten Fall wurde eine heizbare Zahnradpumpe (4) verwendet und die gravimetrische Dosierung mit Hilfe einer Differentialdosierwaage (5) vorgenommen. Zur Weichmacherdosierung wird ebenfalls eine Zahnradpumpe (6) eingesetzt, kombiniert mit einem Massedurchflußmesser. Die Dosierung flüssiger niedrigviskoser Komponenten ist unkritisch und kann auch mit Hilfe anderer Pumpentypen erfolgen, gekoppelt mit einer Detektion des Volumen- oder Massestromes.

Der Kneter (1) gliedert sich in 5 Zonen, die Schüsse (7), (8), (9), (10) und (11), (3D/4D/4D/4D/4D), die jeweils durch Stauringe (12), (13), (14) und (15) voneinander getrennt sind. Im 2. Schuß (8) wird hochdisperse Kieselsäure (HDK) (16) ebenfalls mit Hilfe einer Differentialdosierwaage (17) über eine Einlaufschnecke (ELS) (18) dem Kneter (1) zugeführt. Prinzipiell sind auch andere Dosiersysteme, z.B. Sidefeeder, einsetzbar. Verwiesen wird zudem auf die Möglichkeit der gravimetrischen Dosierung mit Hilfe von Membranpumpen.

Der 3. bis 5. Schuß, (9), (10) und (11), dienen als Knet- und Entgasungszone. Angelegt wird ein Vakuum, erzeugt mit Hilfe einer Wasserringpumpe (19). Geeignet sind ferner Drehkolbenpumpen oder Strahlpumpen.

Der Produktaustrag aus dem Kneter erfolgt über eine nachgeschaltete kurze Austragsschnecke (20) oder Zahnradpumpe. Druckseitig ist eine Breitschlitzdüse (21) vorgeschaltet, die über einen eingeschweißten Steg geteilt wird, so daß der Produktaustrag (22) in Form von zwei Bändern im Massenverhältnis von etwa 1 : 3 erfolgt. Prinzipiell kann eine Teilung des Massenstromes auch mit Hilfe geeigneter Extruderwerkzeuge oder mit Drosselvorrichtungen in einer dem Extruder nachgeschalteten Verzweigung erfolgen. Die Rückführung der einzuspeisenden Siliconkautschukmasse (23) in den 1. Schuß (7) des Kneters erfolgt mit Hilfe eines Förderbandes (24). Vorteilhaft könnte zum Wiedereindosieren der rückgeführten Siliconkautschukmasse ein Ein- oder Zweiwellenextruder oder eine Zahnradpumpe eingesetzt werden. Der Kneter ist mit drei Temperaturmeßstellen (25), (26) und (27) ausgestattet.

### Verwendete Rezeptur

Den das erfindungsgemäße Verfahren demonstrierenden Beispielen sowie Vergleichsbeispielen wurde eine Siliconkautschukmasse folgender Zusammensetzung zugrunde gelegt:

### HTV-Festpolymer:

100 Gew.-Teile eines HTV-Festpolymeres, welches bei einer Temperatur von 25°C und einer Scherrate von 0.81 1/sec eine Viskosität von ca. 20.000 Pa.s aufweist und gemäß des ¹H-NMR-Spektrums folgende zahlenmittlere Zusammensetzung besitzt:

Vi-Si(Me)₂-[OSi(Me)₂]ₘ-[OSiMeVi]ₙ-OSi(Me)₂-Vi,

wobei Me den Methylrest und Vi den Vinylrest bezeichnen, n+m ca. 6.000 ist und m/n ca. 3.000 beträgt.

### Weichmacher:

16,7 Gew.-Teile eines Weichmachers, welcher gemäß des ²⁹Si-NMR-Spektrums folgende zahlenmittlere Zusammensetzung besitzt:

HO-Si (Me)₂-[OSi (Me) ₂]ₘ-OSi(Me) ₂-OH,

wobei m ca. 14 ist und die bei einer Temperatur von 25°C gemessene Viskosität 41 mm²/s beträgt.

### Kieselsäure:

50 Gew.-T1. einer unter der Bezeichnung Wacker HDK® T30 erhältliche pyrogen erzeugte Kieselsäure mit einer nach BET gemessenen spezifischen Oberfläche von 300 m²/g.

### Beispiel 1 (Mitdosierung einer fertigen Siliconkautschukmasse mit Rückführung)

Gemäß Fig.1 wurden dem Kneter 30 kg/h des Festpolymers und 5 kg/h des Weichmachers im Schuß (7) zugeführt. Im Schuß (8) erfolgte die Dosierung von 15 kg/h HDK. Die Temperatur der Siliconkautschukmasse bei einer Wellendrehzahl von 180 U/min wurde durch Temperierung der Welle und der einzelnen Schüsse des Zylinders so gestaltet, daß an den Temperaturmeßstellen (25), (26) und (27) ca. 150°C/200°C/180°C gemessen wurden. Der Produktstrom nach der Austragsschnecke wurde über eine mit einem Steg versehene Breitschlitzdüse (21) geteilt, wobei 50 kg/h als nicht gestrainerte Siliconkautschukmasse (22) ausgeschleust wurden (= Probe 1) und die übrigen 16 kg/h (23) retour über das Förderband (24) in den Schuß (7) des Kneters geführt wurden.

### Beispiel 2 (nicht erfindungsgemäß; Mitdosierung einer fertigen Siliconkautschukmasse ohne Rückführung)

In den Schuß 1 des Kneters wurden ca. 16 kg/h - quasi kontinuierlich - einer bereits fertigen, der vorstehend beschriebenen Rezeptur entsprechenden Siliconkautschukmasse in Form von Kautschukbändern dosiert. Polymer- und Weichmacherdosierung erfolgten wie unter Beispiel 1 angegeben.

Der Massenstrom der ausgetragenen Siliconkautschukmasse stellte sich zu 66 kg/h ein (= Probe 2). Durch zusätzliches Heizen der Zone 1 (7) kann ein dem vorhergehendem Versuch vergleichbares Temperaturprofil eingestellt werden.

### Beispiel 3 (nicht erfindungsgemäß; es erfolgt weder eine Rückführung noch eine sonstige zusätzliche Dosierung von Siliconkautschukmasse in Schuß 1)

Der Kneter wurde mit den rezepturkonformen Mengen an Einsatzstoffen (HTV-Festpolymer, Weichmacher, Kieselsäure) beschickt, so daß ein Durchsatz von 50 kg/h resultiert (= Probe 3). Die Einstellung eines den erfindungsgemäßen Beispielen 1 und 2 vergleichbaren Temperaturprofiles erfolgte über eine entsprechende Mantel- und Wellentemperierung.

### Beispiel 4 (nicht erfindungsgemäß; es erfolgt weder eine Rückführung noch eine sonstige zusätzliche Dosierung von Siliconkautschukmasse in Schuß 1)

Um einen den erfindungsgemäßen Beispielen 1 und 2 vergleichbaren Füllgrad des Kneters zu simulieren, wurden die Stauringe (13), (14) und (15) verengt. Als maximal möglicher Durchsatz konnten ca. 45 kg/h Siliconkautschukmasse produziert werden. Auch bei diesem Versuch wurden die Produkttemperaturen über die Temperierung vergleichbar gestaltet (= Probe 4).

### Beispiel 5 (nicht erfindungsgemäß; es erfolgt weder eine Rückführung noch eine sonstige zusätzliche Dosierung von Siliconkautschukmasse in Schuß 1)

Es wurde unter den in Beispiel 3 angegebenen Bedingungen versucht, den Durchsatz auf 66 kg/h zu steigern. Dies scheiterte, weil bereits bei einem geringfügig oberhalb 50 kg/h liegenden Durchsatz die Kieslsäure von der Festpolymer/Weichmacher-Mischung nicht mehr aufgenommen wurde (keine Probe).

**Tabelle 1:**

| **Visuelle Beurteilung der Siliconkautschukmasse im aufgeklappten Kneter nach einem Notstopp** | | | | | |
|---|---|---|---|---|---|
| **Probe** | **Zone 1** | **Zone 2** | **Zone 3** | **Zone 4** | **Zone 5** |
| 1 | **weiche Kautschukmasse** | **knollenförmige, weitgehend zusammenhängende Kautschukmasse** | **transparente, plastische, kompakte Siliconkautschukmasse** | | |
| **2** | **weiche Kautschukmasse** | **knollenförmige, weitgehend zusammenhängende Kautschukmasse** | **transparente, plastische, kompakte Siliconkautschukmasse** | | |
| **3** | **Polymer- Weichmacher- Gemisch** | **trockene, pulverförmige Mischung** | **milchige, relativ bröselige Kautschukmasse** | **nahezu transparente Kautschukmasse** | **transparente, plastische Kautschukmasse** |
| **4** | **Polymer- Weichmacher- Gemisch** | **trockene, pulverförmige Mischung** | **milchige, relativ bröselige Kautschukmasse** | **transparente, plastische, kompakte Siliconkautschukmasse** | |

Die Kneterfüllgrade in den Zonen 3 und 4 der Proben 1 und 2 entsprechen der Probe 4; im Fall der Probe 3 wird ein geringerer Füllgrad festgestellt.

### Prüfung der hergestellten Siliconkautschukmassen

In allen Versuchen wurden die hergestellten Proben der Siliconkautschukmassen durch Lagern auf Raumtemperatur abgekühlt und in PE-Folien eingeschlagen. Bestimmt wurde in Abhängigkeit von der Lagerdauer die Viskosität der Siliconkautschuk-Probe, gemessen in Mooney-Einheiten. Zudem wurde das Verhalten eines Kautschukmasse-Probekörpers auf dem Walzwerk qualitativ beurteilt.

**Tabelle 2:**

| **Abhängigkeit der Mooney-Viskosität der Proben von der Lagerzeit** | | | | | | | | | | | | |
|---|---|---|---|---|---|---|---|---|---|---|---|---|
| **Lagerdauer bei RT** | **Probe 1** | | | **Probe 2** | | | **Probe 3** | | | **Probe 4** | | |
| | **A** | **B** | **C** | **A** | **B** | **C** | **A** | **B** | **C** | **A** | **B** | **C** |
| **1 Tag** | **67** | **57** | **10** | **70** | **59** | **11** | **68** | **60** | **08** | **65** | **55** | **10** |
| **1 Woche** | **70** | **57** | **13** | **73** | **59** | **14** | **80** | **60** | **20** | **76** | **55** | **21** |
| **2 Wochen** | **72** | **57** | **15** | **74** | **59** | **15** | **83** | **59** | **24** | **78** | **54** | **24** |
| **1 Monat** | **73** | **57** | **16** | **74** | **59** | **15** | **87** | **57** | **30** | **83** | **53** | **30** |
| **2 Monate** | **73** | **57** | **16** | **76** | **59** | **17** | **91** | **56** | **37** | **88** | **52** | **36** |
| **3 Monate** | **74** | **57** | **17** | **77** | **59** | **18** | **nicht meßbar; Proben bröseln** | | | | | |
| **6 Monate** | **75** | **56** | **19** | **78** | **58** | **20** | **nicht meßbar; Proben bröseln** | | | | | |

Die in Tabelle 2 angegebenen Mooney-Werte (ML1+4) bedeuten: A = Mooney-Anfangswert, B = Mooney-Endwert und C = Differenz zwischen Anfangswert und Endwert (DIN 53523).

### Verhalten auf der Walze

### Proben 1 und 2:

Gutes Einzugsverhalten auch nach einer Lagerdauer von 6 Monaten; relativ trockener Griff; kein Kleben auf der Walze.

### Proben 3 und 4:

Gutes Einzugsverhalten bis zu einer Lagerdauer von ca. 2 Monaten. Nach längerer Lagerung zerbröseln die Proben im Walzenspalt. Der plastische Kautschuk verhält sich etwas klebrig auf dem Walzwerk. Das Verarbeitungsverhalten der Probe 4 ist etwas günstiger als jenes der Probe 3.

### Ergebnis:

Die nach Proben 1 und 2 weisen eine deutlich bessere Lagerstabilität auf; sie zeichnen sich aus durch einen trockenen Griff und besseres Walzverhalten.

## Patentansprüche

1. Kontinuierliches Verfahren zur Herstellung füllstoffhaltiger Siliconmassen (P), bei dem eine Füllstoff (F1) enthaltende Siliconmasse (E) mit Füllstoff (F2) vermischt wird, wobei eine Teilmenge der Siliconmasse (P) als Siliconmasse (E) zurückgeführt wird.

2. Verfahren nach Anspruch 1, bei dem zunächst Polyorganosiloxan und anschließend der Füllstoff (F2) in die Siliconmasse (E) eingemischt wird.

3. Verfahren nach Anspruch 1, bei dem der Mischvorgang bei 50°C bis 250°C erfolgt.

4. Verfahren nach Anspruch 1 bis 3, bei dem die Siliconmassen (P) eine bei 25°C gemessene Viskosität von mindestens 500 Pa.s. aufweisen.

5. Verfahren nach Anspruch 1 bis 4, bei dem die Siliconmassen (P) hitzehärtbare HTV-Fertigmassen oder Basismischungen, die der Herstellung von vernetzungsfähigen HTV-Fertigmassen dienen, sind.

## Claims

1. Continuous process for producing filler-containing silicone compositions (P) in which a silicone composition (E) comprising filler (F1) is mixed with filler (F2) part of the silicone composition (P) is recirculated as silicone composition (E).

2. Process according to Claim 1, wherein first polyorganosiloxane and subsequently the filler (F2) are mixed into the silicone composition (E).

3. Process according to Claim 1, wherein the mixing process is carried out at from 50°C to 250°C.

4. Process according to any of Claims 1 to 3, wherein the silicone compositions (P) have a viscosity measured at 25°C of at least 500 Pa.s.

5. Process according to any of Claims 1 to 4, wherein the silicone compositions (P) are finished HTV compositions or base mixtures employed for producing finished, crosslinkable HTV compositions.

## Revendications

1. Procédé en continu pour la préparation de masses de silicone (P) contenant des charges, dans lequel une masse de silicone (E) contenant une charge (F1) est mélangée à une charge (F2), une quantité partielle de la masse de silicone (P) étant renvoyée en tant que masse de silicone (E).

2. Procédé selon la revendication 1, dans lequel on incorpore par mélange d'abord un polyorganosiloxane et ensuite la charge (F2) dans la masse de silicone (E).

3. Procédé selon la revendication 1, dans lequel l'opération de mélange se déroule entre 50°C et 250°C.

4. Procédé selon les revendications 1 à 3, dans lequel les masses de silicone (P) présentent une viscosité d'au moins 500 Pa.s mesurée à 25°C.

5. Procédé selon les revendications 1 à 4, dans lequel les masses de silicone (P) sont des masses finies HTV (hochtemperaturvernetzend - réticulant à haute température) ou des mélanges de base thermodurcissables, qui servent à la fabrication de masses finies HTV pouvant être réticulées.
